(19) Europäisches Patentamt
European Patent Office
Office européen des brevets

(11) EP 1 632 458 B1

(12) # EUROPÄISCHE PATENTSCHRIFT

(45) Veröffentlichungstag und Bekanntmachung des Hinweises auf die Patenterteilung:
**05.10.2011 Patentblatt 2011/40**

(51) Int Cl.:
*C01B 33/193* (2006.01) *C01B 33/18* (2006.01)
*C09C 1/30* (2006.01) *B60C 1/00* (2006.01)

(21) Anmeldenummer: **05109841.6**

(22) Anmeldetag: **23.07.2003**

(54) **Hochdispersible Fällungskieselsäure**

Highly dispersed precipitated silica

Silice de précipitation fortement dispersé

(84) Benannte Vertragsstaaten:
**AT BE BG CH CY CZ DE DK EE ES FI FR GB GR HU IE IT LI LU MC NL PT RO SE SI SK TR**

(30) Priorität: **03.08.2002 DE 10235560**
**04.07.2003 DE 10330221**

(43) Veröffentlichungstag der Anmeldung:
**08.03.2006 Patentblatt 2006/10**

(62) Dokumentnummer(n) der früheren Anmeldung(en) nach Art. 76 EPÜ:
**03784044.4 / 1 525 157**

(73) Patentinhaber: **Evonik Degussa GmbH**
**45128 Essen (DE)**

(72) Erfinder:
- **Stenzel, Oleg, Dr.**
**50999 Köln (DE)**
- **Uhrlandt, Stefan, Dr.**
**Belle Mead,**
**New Jersey 08502 (US)**
- **Luginsland, Hans-Detlef, Dr.**
**Hoboken,**
**New Jersey 07030 (US)**
- **Wehmeier, André**
**50354 Hürth (DE)**

(56) Entgegenhaltungen:
**WO-A-2004/014797 US-A- 5 925 708**
**US-B1- 6 180 076**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 632 458 B1

Printed by Jouve, 75001 PARIS (FR)

## Beschreibung

Die vorliegende Erfindung betrifft eine hochdispersible Fällungskieselsäure, die eine hohe Oberfläche aufweist, ein Verfahren zu deren Herstellung und deren Verwendung als Reifenfüllstoff für Nutzfahrzeuge, Motorräder und Hochgeschwindigkeitsfahrzeuge.

Der Einsatz von Fällungskieselsäuren in Elastomerenmischungen wie Reifen ist lange bekannt. An Kieselsäuren, die in Reifen eingesetzt werden, werden hohe Anforderungen gestellt. Sie sollen leicht und gut im Kautschuk dispergierbar sein, eine gute Verbindung mit den im Kautschuk enthaltenen Polymerketten bzw. den übrigen Füllstoffen eingehen und einen hohen, rußähnlichen Abriebwiderstand aufweisen. Neben der Dispergierbarkeit der Kieselsäure sind daher u. a. die spezifischen Oberflächen (BET oder CTAB) und die Ölaufilahmekapazität (DBP) wichtig. Die Oberflächeneigenschaften von Kieselsäuren bestimmen maßgeblich deren mögliche Anwendung, bzw. bestimmte Anwendungen einer Kieselsäure (z. B. Trägersysteme oder Füllstoffe für Elastomerenmischungen) verlangen bestimmte Oberflächeneigenschaften.

So offenbart US 6013234 die Herstellung von Fällungskieselsäure mit einer BET- und CTAB-Oberfläche jeweils von 100 bis 350 $m^2/g$. Diese Kieselsäure ist besonders zur Einarbeitung in Elastomerenmischungen geeignet, wobei die BET/CTAB-Verhältnisse zwischen 1 und 1.5 liegen. In EP 0937755 werden verschiedene Fällungskieselsäuren offenbart, die eine BET-Oberfläche von ca. 180 bis ca. 430 $m^2/g$ und eine CTAB-Oberfläche von ca. 160 bis 340 $m^2/g$ besitzen. Diese Kieselsäuren sind besonders als Trägermaterial geeignet und weisen ein BETzum CTAB-Verhältnis von 1.1 bis 1.3 auf EP 0647591 offenbart eine Fällungskieselsäure, die ein Verhätnis von BET- zu CTAB-Oberfläche von 0.8 bis 1.1 aufweist, wobei diese Oberflächenkennzeichen Absolutwerte von bis zu 350 $m^2/g$ annehmen können. In EP 0643015 wird eine Fällungskieselsäure, die als Abrasiv- und/oder Verdickungskomponente in Zahnpasten eingesetzt werden kann, vorgestellt, die eine BET-Oberfläche von 10 bis 130 $m^2/g$ und eine CTAB-Oberfläche von 10 bis 70 $m^2/g$, d. h. ein BET- zu CTAB-Verhältnis von ca. 1 bis 5.21 aufweist. In der US 5705137 werden Kieselsäuren mit sehr hohen BET-Oberflächen, Beispiel 1 413$m^2/g$ und Beispiel 2 522 $m^2/g$, offenbart, welche als Füllstoffe in vulkanisierbaren Kautschukmischungen eingesetzt werden.

Kieselsäuren, die besonders als Füllstoff für Elastomerenmischungen, hier insbesondere **PKW-**Reifen geeignet sind, werden in EP 0901986 mit den folgenden Eigenschaften beschrieben:

| | |
|---|---|
| BET-Oberfläche | 120 - 300 $m^2/g$ |
| CTAB-Oberfläche | 100 - 300 $m^2/g$ |
| Verhältnis BET/CTAB | 0.8 - 1.3 |
| Searszahl $V_2$ (Verbrauch 0.1 N NaOH) | 6 - 25 ml/(5 g) |
| DBP-Zahl | 150 - 300 g/(100 g) |
| WK-Koeffizient | < 3.4 |
| Partikelgröße der abgebauten Partikel | < 1.0 μm |
| Partikelgröße der nicht abgebauten Partikel | 1.0 -100 μm |

An Fahrzeugreifen werden je nach Einsatzzweck sehr unterschiedliche Anforderungen gestellt. Bei einer groben Unterteilung in PKW- und LKW-Reifen sind zumindest die folgenden Unterschiede zu beachten:

| | **Anforderung PKW-Reifen (Richtwerte)** | **Anforderung LKW-Reifen (Richtwerte)** |
|---|---|---|
| Hauptbestandteil der Lauffläche | E- und L-SBR/BR-Blends | NR, teilweise als BR-Verschnitt |
| Rundemeuerbarkeit | unwichtig | mind. 3 mal |
| Laufleistung | 40 000 km in Europa<br>64 000 km in den USA | 3 x 200 000 km |
| Höchstgeschwindigkeit | 160 - 240 km/h und höher | 100 km/h (max. 140 km/h) |
| Fülldruck | 2.2 bar | 8.5 bar |
| Tragfähigkeit pro Achse | 1 000 kg | 6 300 kg (Einfachbereifung) |
| Off-Road-Benutzung | gering | hoch |
| Heat Build Up | gering | sehr wichtig |
| Rollwiderstand | sehr wichtig | wichtig |

(fortgesetzt)

| | Anforderung PKW-Reifen (Richtwerte) | Anforderung LKW-Reifen (Richtwerte) |
|---|---|---|
| Zugfestigkeit | gering | wichtig |

PKW im Sinne der vorliegenden Erfindung sind Fahrzeuge für den Personentransport zur überwiegend privaten Nutzung, d. h. keine Nutzfahrzeuge wie z. B. Lieferfahrzeuge. Hierunter fallen keine Fahrzeuge, die üblicherweise bei hohen Geschwindigkeiten betrieben werden, auch wenn diese gemäß ihrer Bauart als PKW gelten könnten. Diese Fahrzeuge haben ebenfalls andere Anforderungen an Reifen als die in der Tabelle genannten PKW-Reifen.

Reifen für Motorräder und Hochgeschwindigkeits-PKW müssen ebenfalls hohen Belastungen bei hohen Geschwindigkeiten und ein sehr gutes Trocken- und Nassrutschverhalten (Traktion) aufweisen. Eine gute Traktion soll jedoch nicht mit vermehrtem Abrieb bzw. hohem Rollwiderstand verbunden sein.

Die unterschiedlichen Anforderungen der Fahrzeuge an die Reifen haben entsprechende Auswirkungen an die in den Reifen verwendeten Füllstoffe. Die in PKW-Reifen lange etablierte Zumischung von Kieselsäuren und Organosilizumverbindungen als Füllstoffsystem führt zu einem vermindertem Rollwiderstand, einem verbesserten Traktionsverhalten und einem geringeren Abrieb. Eine Übertragung dieser verbesserten Eigenschaften auf Reifen für Nutzfahrzeuge wie LKW wäre wünschenswert, da mit einem verminderten Rollwiderstand ein geringerer Kraftstoffverbrauch verbunden ist. Die unterschiedlichen Anforderungen der genannten Fahrzeuge an ihre Reifen führen jedoch zwangsläufig zu unterschiedlichen Anforderungen an die verwendeten Füllstoffe.

Es hat sich gezeigt, dass die in PKW-Reifen eingesetzten Kieselsäuren zur Verwendung in LKW-Reifen, Motorradreifen und Hochgeschwindigkeitsreifen für PKW auf Grund des unterschiedlichen Anforderungsprofils ungeeignet sind. Aufgabe der vorliegenden Erfindung war es daher, Fällungskieselsäuren mit einem speziell auf diese Fahrzeuge abgestimmten Eigenschaftsprofil bereitzustellen. Es ist dem Fachmann bekannt, dass bei der Verwendung von aktiven Rußen als Reifen-Füllstoff mit einer Erhöhung der Oberfläche eine Verbesserung der Verstärkung und somit des Abriebwiderstands des Reifens erzielt wird. Die Verwendung von Rußen mit hohen Oberflächen (CTAB Oberfläche > 130 $m^2/g$) ist aber aufgrund des stark ansteigenden Wärmeaufbaus (Hystereseverhalten, beschrieben und meßbar nach DIN 53535, bzw. nach den in dieser DIN genannten Referenzen) in derart gefüllten Mischungen limitiert.

Es wurde nun gefunden, das eine Fällungskieselsäure, die eine hohe CTAB-Oberfläche aufweist, besonders gut als Füllstoff in Elastomerenmischungen für Nutzfahrzeugbereifungen, für Motorradreifen und Reifen für Hochgeschwindigkeits-PKW geeignet ist.

Gegenstand der vorliegenden Erfindung, sind daher Fällungskieselsäuren mit einer BET-Oberfläche von 178 - 257 $m^2/g$, einer CTAB-Oberfläche von ≥ 170 $m^2/g$, einer DBP-Zahl von 207 - 276 g/(100 g) und einer Searszahl $V_2$ von 20 - 35 ml/(5 g).

Aufgrund der deutlich erniedrigten Hysterese bei der Verwendung von erfindungsgemäßen Kieselsäure als Füllstoff lassen sich damit auch Oberflächen realisieren, die sich beim Ruß aufgrund der höheren Hysterese verbieten, und so zu einer Verbesserung des Abriebwiderstands führen.

EP 1186629 offenbart Kieselsäuren mit hohen CTAB-Oberflächen, die als Füllstoff für Reifen geeignet sind. Angaben über die Searszahl bzw. damit über die Konzentration von Hydroxygruppen an der Kieselsäureoberfläche, sind EP 1186629 nicht zu entnehmen.

Die erfindungsgemäßen Fällungskieselsäuren können eine maximale CTAB-Oberfläche von 300 $m^2/g$, insbesondere eine CTAB-Oberfläche von 170 - 220 $m^2/g$ oder 245 - 300 $m^2/g$ aufweisen.

Die erfindungsgemäßen Fällungskieselsäuren können eine BET-Oberfläche in den Vorzugsbereichen von 190 - 230 $m^2/g$ aufweisen.

Ein weiterer Gegenstand der vorliegenden Erfindung ist ein Verfahren zur Herstellung einer Fällungskieselsäure mit einer

| | |
|---|---|
| BET-Oberfläche | 178 - 257 $m^2/g$ |
| CTAB-Oberfläche | ≥ 170 $m^2/g$ |
| DBP-Zahl | 207 - 276 g/(100 g) |
| Searszahl $V_2$ | 20 - 35 ml/(5 g) |

wobei

a) eine wässrige Lösung eines Alkali- oder Erdalkalisilikats und/oder einer organischen und/oder anorganischen Base mit einem pH 7.0 - 8.5 vorgelegt

b) in diese Vorlage unter Rühren bei 55 - 95 °C für 10 - 120, bevorzugt 10 - 60 Minuten gleichzeitig Wasserglas und ein Säuerungsmittel dosiert,

e) mit einem Säuerungsmittel auf einen pH-Wert von ca. 3.5 angesäuert und

f) filtriert und getrocknet wird.

Die erfindungsgemäß hergestellten Fällungskieselsäuren können neben den bereits genannten Vorzugsbereichen für die BET- und CTAB-Oberflächen jeweils unabhängig Eigenschaften in den folgenden Vorzugsbereichen aufweisen:

| | |
|---|---|
| **WK-Koeffizient** | **≤ 3.4, bevorzugt ≤ 3.0, insbesondere ≤ 2.5** |

Der WK-Koeffizient ist als Verhältnis der Peakhöhe der durch Ultraschall nicht abbaubaren Partikel im Größenbereich 1.0 - 100 µm zur Peakhöhe der abgebauten Partikel im Größenbereich < 1.0 µm definiert (siehe Fig. 1).

Die Vorlage kann ca. 20, 30, 40, 50, 60, 70, 80 oder 90 % des Endvolumens der Fällung betragen. Die zur Vorlage gegebenen basischen Verbindungen sind insbesondere ausgewählt aus der Gruppe der Alkalihydroxide, Erdalkalihydroxide, Alkalicarbonate, Alkalihydrogencarbonate und Alkalisilikate. Bevorzugt werden Wasserglas und/oder Natronlauge verwendet. Der pH-Wert der Vorlage liegt zwischen 7.0 und 8.5, bevorzugt zwischen 7.5 und 8.5.

Optional kann das erfindungsgemäße Verfahren einen Haltepunkt aufweisen. Hierbei werden zwischen den Schritten b) und e) die Schritte

c) Stoppen der Zudosierung für 30 - 90 Minuten unter Einhaltung der Temperatur und

d) gleichzeitiges Zudosieren von Wasserglas und einem Säuerungsmittel bevorzugt Schwefelsäure bei gleicher Temperatur unter Rühren für 20 - 120, bevorzugt 20 - 80 Minuten

durchgeführt.

Optional kann eine zusätzliche Zugabe von organischen oder anorganischen Salzen während der Schritte b) und d) erfolgen. Dies kann in Lösung oder als Feststoff, jeweils kontinuierlich über die Zugabezeit des Wasserglases und des Säuerungsmittels bevorzugt Schwefelsäure oder als Batchzugabe durchgeführt werden. Es ist auch möglich, die Salze in einer oder beiden Komponenten zu lösen und dann gleichzeitig mit diesen zuzugeben.

Als anorganische Salze werden bevorzugt Alkali- oder Erdalkalisalze verwendet. Insbesondere können Kombinationen der folgenden Ionen eingesetzt werden:

$Li^+$, $Na^+$, $K^+$, $Rb^+$, $Be^{2+}$, $Mg^{2+}$, $Ca^{2+}$, $Sr^{2+}$, $Ba^{2+}$, $H^+$, $F^-$, $Cl^-$, $Br^-$, $I^-$, $SO_3^{2-}$, $SO_4^{2-}$, $HSO_4^-$, $PO_3^{3-}$, $PO_4^{3-}$, $NO_3^-$, $NO_2^-$, $CO_3^{2-}$, $HCO_3^-$, $OH^-$, $TiO_3^{2-}$, $ZrO_3^{2-}$, $ZrO_4^{4-}$, $AlO_2^-$, $Al_2O_4^{2-}$, $BO_4^{3-}$.

Als organische Salze sind die Salze der Ameisen-, Essig- und Propionsäure geeignet. Als Kation seien die genannten Alkali- oder Erdalkalüonen genannt. Die Konzentration dieser Salze in der Zugabelösung kann 0.01 bis 5 mol/l betragen. Bevorzugt wird als anorganisches Salz $Na_2SO_4$ verwendet.

Es ist möglich, das Säuerungsmittel in den Schritten b) und d) in gleicher oder unterschiedlicher Weise zuzuführen, d. h. mit gleichen oder unterschiedlichen Konzentrationen und/oder Zulaufgeschwindigkeiten.
Analog kann auch das Wasserglas in den Schritten b) und d) in gleicher oder unterschiedlicher Weise der Reaktion zugeführt werden.

In einer besonderen Ausführungsform werden in den Schritten b) und d) die Komponenten Säuerungsmittel und Wasserglas so zugeführt, dass die Zulaufgeschwindigkeiten in Schritt d) 125 - 140 % der Zulaufgeschwindigkeiten in Schritt b) betragen, wobei die Komponenten in beiden Schritten jeweils in jeweils äquimolare Konzentration eingesetzt werden. Bevorzugt werden die Komponenten mit gleicher Konzentration und Zulaufgeschwindigkeit zugesetzt.

Neben Wasserglas (Natriumsilikat-Lösung) können auch andere Silikate wie Kalium- oder Calciumsilikat verwendet werden. Als Säuerungsmittel können neben Schwefelsäure auch andere Säuerungsmittel wie HCl, $HNO_3$, $H_3PO_4$ oder $CO_2$ eingesetzt werden.

Die Filtration und Trocknung der erfindungsgemäßen Kieselsäuren sind dem Fachmann geläufig und können z. B. in den genannten Dokumenten nachgelesen werden. Bevorzugt wird die fällungsgemäße Kieselsäure in einem Stromtrockner, Sprühtrockner, Etagentrockner, Bandtrockner, Drehrohrtrockner, Flash-Trockner, Spin-Flash-Trockner oder Düsenturm getrocknet. Diese Trocknungsvarianten schließen den Betrieb mit einem Atomizer, einer Ein- oder Zweistoffdüse oder einem integrierten Fließbett ein. Bevorzugt weist die erfindungsgemäße Fällungskieselsäure nach dem Trockungsschritt eine Partikelform mit einem mittleren Durchmesser von über 15 µm, insbesondere über 80 µm, besonders bevorzugt über 200 µm auf. Der mittlere Partikeldurchmesser ist so definiert, dass 50 Gew.-% der Partikel

einen größeren oder kleineren Durchmesser aufweisen.

Nach der Trocknung kann auch einer Granulation mit einem Walzenkompaktor durchgeführt werden. Hier liegt der mittlere Partikeldurchmesser bei ≥ 1 mm.

Bevorzugt wird die erfindungsgemäße Kieselsäure in Reifen für Nutzfahrzeuge LKW, Hochgeschwindigkeits-PKW und Motorräder verwendet.

Als Nutzfahrzeuge im Sinne der vorliegenden Erfindung gelten alle Fahrzeuge, an deren Reifen hohe Ansprüche bzgl. der Laufleistungen bzw. Verschleiss gestellt werden. Hinsichtlich der Anforderung an eine hohen Laufleistung sind insbesondere Reifen für Busse, LKW und/oder Lieferfahrzeuge sowie Anhänger zu nennen. Hinsichtlich Verschleissfestigkeit wie z. B. Stolleneinreißfestigkeit Chipping, Chunking sind Reifen für Off-Road-Fahrzeuge, Bau- und Landmaschinen, Grubenfahrzeuge und Traktoren zu nennen. Hier sind insbesondere Fahrzeuge mit einer Achslast von mehr als 1 Tonne bzw. mit einem zulässigen Gesamtgewicht von über 2, 4, 7.5 oder 15 Tonnen gemeint. Die erfindungsgemäßen Kieselsäuren können insbesondere in Traktionsreifen für schwere LKW oder deren Anhänger verwendet werden. Solche Fahrzeuge weisen häufig Achslasten von über 5 Tonnen bzw. einen Reifendurchmesser von über 17" auf.

Reifen für Nutzfahrzeuge wie LKW werden nach Geschwindigkeitsklassen eingeteilt. Die erfindungsgemäßen Kieselsäuren sind besonders geeignet für (LKW-)Reifen, die für Geschwindigkeiten zwischen 80 und 140 km/h zugelassen sind und die Symbole F, G, J, K, L, M oder N tragen.

Reifen für Hochgeschwindigkeitsfahrzeuge (Motorrad oder PKW) sind solche, die für eine Geschwindigkeit über 180 km/h zugelassen sind. Dies sind (PKW-)Reifen mit den Symbolen S, T, U, H, V, W, Y und ZR.

Ein weiterer Gegenstand der Erfindung sind Elastomerenmischungen, vulkanisierbare Kautschukmischungen und/oder sonstige Vulkanisate, die die erfindungsgemäße Kieselsäure enthalten, wie beispielsweise Formkörper wie Luftreifen, Reifenlaufflächen, Kabelmäntel, Schläuche, Treibriemen, Förderbänder, Walzenbeläge, Reifen, Schuhsohlen, Dichtungsringe und Dämpfungselemente.

Weiterhin können die erfindungsgemäßen Kieselsäuren in allen Anwendungsgebieten verwendet werden, in denen üblicherweise Kieselsäuren eingesetzt werden, wie z. B. in Batterieseparatoren, als Anti-Blocking-Mittel, als Mattierungsmittel in Farben und Lacken, als Träger von Agrarprodukten und Nahrungsmitteln, in Beschichtungen, in Druckfarben, in Feuerlöschpulvern, in Kunststoffen, im Bereich non impact printing, in Papiermasse, im Bereich personal care und Spezialanwendungen.

Unter Verwendung im Bereich non impact printing z. B. im Inkjet-Verfahren ist die Verwendung der erfindungsgemäßen Kieselsäuren in

- Druckfarben zur Verdickung oder zum Verhindern von Spritzen und Abliegen,
- Papier als Füllstoff, Streichpigment, Lichtpauspapier, Thermopapier, bei der Thermosublimation zur Verhinderung des Durchschlagens von Druckfarben, zur Verbesserung der Bildgrundruhe und Kontrast, zur Verbesserung der Punktschärfe und der Farbbrillianz zu verstehen.
- Unter Verwendung im Bereich personal care ist die Verwendung der erfindungsgemäßen Kieselsäuren als Füllstoff oder Verdickungsmittel z. B. im Bereich der Pharmazie oder Körperpflege zu verstehen.

Optional kann die erfindungsgemäße Kieselsäure mit Silanen oder Organosilanen der Formeln I bis III modifiziert werden

$$[SiR^1_n(RO)_r(Alk)_m(Ar)_p]_q[B] \qquad (I),$$

$$SiR^1_n(RO)_{3-n}(Alkyl) \qquad (II),$$

oder

$$SiR^1_n(RO)_{3-n}(Alkenyl) \qquad (III),$$

in denen bedeuten

B: -SCN, -SH, -Cl, $-NH_2$, $-OC(O)CHCH_2$, $-OC(O)C(CH_3)CH_2$ (wenn q = 1) oder- $S_w$- (wenn q = 2), wobei B chemisch an Alk gebunden ist,

R und R': aliphatischer, olefinischer, aromatischer oder arylaromatischer Rest mit 2 - 30 C- Atomen, der optional mit den folgenden Gruppen substituiert sein kann: Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Acrylat-, Metacrylat-, Organosilanrest, wobei R und $R^1$ eine gleiche oder verschiedene Bedeutung oder Substituierung haben können.

n: 0, 1 oder 2,

Alk: einen zweiwertigen unverzweigten oder verzweigten Kohlenwasserstoffrest mit 1 bis 6 Kohlenstoffatomen,
m: 0 oder 1,
Ar: einen Arylrest mit 6 bis 12 C-Atomen, bevorzugt 6 C-Atomen, der mit den folgenden Gruppen substituiert sein kann: Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Organosilanrest,
p: 0 oder 1, mit der Maßgabe, dass p und n nicht gleichzeitig 0 bedeuten,
q: 1 oder 2,
w: eine Zahl von 2 bis 8,
r: 1, 2 oder 3, mit der Maßgabe, dass r + n + m + p = 4,
Alkyl: einen einwertigen unverzweigten oder verzweigten gesättigten Kohlenwasserstoffrest mit 1 bis 20 Kohlenstoffatomen, bevorzugt 2 bis 8 Kohlenstoffatomen,
Alkenyl: einen einwertigen unverzweigten oder verzweigten ungesättigten Kohlenwasserstoffrest mit 2 bis 20 Kohlenstoffatomen, bevorzugt 2 bis 8 Kohlenstoffatomen.

Auch kann die erfindungsgemäße Kieselsäure mit siliciumorganischen Verbindungen der Zusammensetzung $SiR^2_{4-n}X_n$ (mit n = 1, 2, 3), $[SiR^2_xX_yO]_z$ (mit $0 \leq x \leq 2$; $0 \leq y \leq 2$; $3 \leq z \leq 10$, mit x + y = 2), $[SiR^2_xX_yN]_z$ (mit $0 \leq x \leq 2$; $0 \leq y \leq 2$; $3 \leq z \leq 10$, mit x + y = 2), $SiR^2_nX_mOSiR^2_oX_p$ (mit $0 \leq n \leq 3$; $0 \leq m \leq 3$; $0 \leq o \leq 3$; $0 \leq p \leq 3$, mit n + m=3, o + p = 3), $SiR^2_nX_mOSiR^2_oX_p$ (mit $0 \leq n \leq 3$; $0 \leq m \leq 3$; $0 \leq o \leq 3$; $0 \leq p \leq 3$, mit n + m=3, o + p = 3), $SiR^2_nX_m[SiR^2_xX_yO]_zSiR^2_oX_p$ (mit $0 \leq n \leq 3$; $0 \leq m \leq 3$; $0 \leq x \leq 2$; $0 \leq y \leq 2$; $0 \leq o \leq 3$; $0 \leq p \leq 3$; $1 \leq z \leq 10000$, mit n + m = 3, x + y = 2, o + p = 3) modifiziert werden. Bei diesen Verbindungen kann es sich um lineare, cyclische und verzweigte Silan-, Silazan- und Siloxanverbindungen handeln. Bei $R^2$ kann es sich um Alkyl- und/oder Arylreste mit 1 - 20 Kohlenstoffatomen handeln, welche mit funktionellen Gruppen wie der Hydroxygruppe, der Aminogruppe, Polyethern wie Ethylenoxid und/oder Propylenoxid und Halogenidgruppen wie Fluorid substituiert sein können. $R^2$ kann auch Gruppen wie Alkoxy-, Alkenyl-, Alkinyl- und Aryl-Gruppen und schwefelhaltige Gruppen enthalten. Bei X kann es sich um reaktive Gruppen wie Silanol-, Amino-, Thiol-, Halogenid-, Alkoxy- Alkenyl- und Hydridgruppen handeln.

Bevorzugt werden lineare Polysiloxane der Zusammensetzung $SiR^2_nX_m[SiR^2_xX_yO]_zSiR^2_oX_p$ (mit $0 \leq n \leq 3$; $0 \leq m \leq 3$; $0 \leq x \leq 2$; $0 \leq y \leq 2$; $0 \leq o \leq 3$; $0 \leq p \leq 3$; $1 \leq z \leq 10000$, mit n + m = 3; x + y = 2; o + p = 3) verwendet, bei welchen $R^2$ bevorzugt durch Methyl repräsentiert wird.

Besonders bevorzugt werden Polysiloxane der Zusammensetzung $SiR^2_nX_m[SiR^2_nX_yO]_zSiR^2_oX_p$ (mit $0 \leq n \leq 3$; $0 \leq m \leq 1$; $0 \leq x \leq 2$; $0 \leq y \leq 2$; $0 \leq o \leq 3$; $0 \leq p \leq 1$; $1 \leq z \leq 1000$, mit n + m = 3, x + y = 2, o + p = 3) verwendet, bei welchen $R^2$ bevorzugt durch Methyl repräsentiert wird.

Die Modifizierung der optional granulierten, ungranulierten, vermahlenen und/oder unvermahlenen Fällungskieselsäure mit einem oder mehreren der genannten Organosilanen kann in Mischungen von 0.5 bis 50 Teilen, bezogen auf 100 Teile Fällungskieselsäure, insbesondere 1 bis 15 Teile, bezogen auf 100 Teile Fällungskieselsäure erfolgen, wobei die Reaktion zwischen Fällungskieselsäure und Organosilan während der Mischungsherstellung (in situ) oder außerhalb durch Aufsprühen und anschließendes Tempern der Mischung, durch Mischen des Organosilans und der Kieselsäuresuspension mit anschließender Trocknung und Temperung (zum Beispiel gemäß DE 3437473 und DE 19609619) oder gemäß des Verfahrens beschrieben in DE 19609619 oder DE-PS 4004781 durchgeführt werden kann.

Als Organosiliziumverbindungen eignen sich grundsätzlich alle bifunktionellen Silane, die einerseits eine Kopplung zu dem silanolgruppenhaltigen Füllstoff und andererseits eine Kopplung zum Polymer bewerkstelligen können. Übliche verwendete Mengen der Organosiliziumverbindungen sind 1 bis 10 Gew.-% bezogen, auf die Gesamtmenge an Fällungskieselsäure.

Beispiele für diese Organosiliziumverbindungen sind:

Bis(3-triethoxysilylpropyl)tetrasulfan, Bis(3-triethoxysilylpropyl)disulfan, Vinyltrimethoxysilan, Vinyltriethoxysilan, 3-Mercaptopropyltrimethoxysilan, 3-Mercaptopropyltriethoxysilan, 3-Aminopropyltrimethoxysilan, 3-Aminopropyltriethoxysilan. Weitere Organosiliziumverbindungen sind in WO 99/09036, EP 1108231, DE 10137809, DE 10163945, DE 10223658 beschrieben.

In einer bevorzugten Ausführungsform der Erfindung kann als Silan das Bis(triethoxysilylpropyl)tetrasulfan eingesetzt werden.

Die erfindungsgemäße Kieselsäure kann in Elastomerenmischungen, Reifen oder vulkanisierbaren Kautschukmischungen als Verstärkerfüllstoff in Mengen von 5 bis 200 Teilen, bezogen auf 100 Teile Kautschuk als Pulver, kugelförmiges Produkt oder Granulat sowohl mit Silanmodifizierung als auch ohne Silanmodifizierung eingemischt werden. Kautschuk- und Elastomerenmischungen sind im Sinne der vorliegenden Erfindung als äquivalent zu betrachten.

Neben Mischungen, die ausschließlich die erfindungsgemäßen Kieselsäuren, mit und ohne den genannten Organosilanen, als Füllstoffe enthalten, können die Elastomeren- oder Kautschukmischungen zusätzlich mit einem oder mehreren mehr oder weniger verstärkenden Füllstoffen gefüllt sein.

Als weitere Füllstoffe können folgende Materialien eingesetzt werden:

- Ruße: Die hierbei zu verwendenden Ruße sind nach dem Flammruß-, Fumace- oder Gasruß-Verfahren hergestellt und besitzen BET-Oberflächen von 20 bis 200 $m^2$/g, wie z. B. SAF-, ISAF-, HSAF-, HAF-, FEF- oder GPF-Ruße. Die Ruße können gegebenenfalls auch Heteroatome wie zum Beispiel Silizium enthalten.
- hochdisperse pyrogene Kieselsäuren, hergestellt zum Beispiel durch Flammenhydrolyse von Siliziumhalogeniden. Die Kieselsäuren können gegebenenfalls auch als Mischoxide mit anderen Metalloxiden, wie Al-, Mg-, Ca-, Ba-, Zn- und Titanoxiden vorliegen.
- weitere kommerzielle Kieselsäuren
- Synthetische Silicate, wie Aluminiumsilicat, Erdalkalisilicate wie Magnesiumsilicat oder Calciumsilicat, mit BET-Oberflächen von 20 bis 400 $m^2$/g und Primärteilchendurchmessern von 10 bis 400 nm.
- Synthetische oder natürliche Aluminiumoxide und -hydroxide
- Natürliche Silicate, wie Kaolin andere natürlich vorkommende Siliziumdioxidverbindungen.
- Glasfaser und Glasfaserprodukte (Matten, Stränge) oder Mikroglaskugeln.
- Stärke und modifizierte Stärketypen
- Naturfüllstoffe, wie zum Beispiel Clays und Kieselkreide

Das Verschnittverhältnis richtet sich auch hier, wie bei der Dosierung der Organosilane, nach dem zu erzielenden Eigenschaftsbild der fertigen Gummimischung. Ein Verhältnis von 5 - 95 % zwischen den erfindungsgemäßen Kieselsäuren und den anderen oben genannten Füllstoffen (auch als Gemisch) ist denkbar und wird in diesem Rahmen auch realisiert.

In einer besonders bevorzugten Ausführungsform können 10 bis 150 Gew.-Teile Kieselsäuren, ganz oder teilweise bestehend aus der erfindungsgemäßen Kieselsäure, gegebenenfalls zusammen mit 0 bis 100 Gew.-Teilen Ruß, sowie 1 bis 10 Gew.-Teile einer Organosiliziumverbindung, jeweils bezogen auf 100 Gew.-Teile Kautschuk, zur Herstellung der Mischungen eingesetzt werden.

Neben den erfindungsgemäßen Kieselsäuren, den Organosilanen und anderen Füllstoffen bilden die Elastomere einen weiteren wichtigen Bestandteil der Kautschukmischung. Zu nennen wären hierbei Elastomere, natürliche und synthetische, ölgestreckt oder nicht, als Einzelpolymer oder Verschnitt (Blend) mit anderen Kautschuken, wie zum Beispiel Naturkautschuke, Polybutadien (BR), Polyisopren (IR), Styrol/Butadien-Copolymerisate mit Styrolgehalten von 1 bis 60, vorzugsweise 2 bis 50 Gew.-% (SBR) insbesonders hergestellt mittels des Lösungspolymerisationsverfahrens, Butylkautschuke, Isobutylen/Isopren-Copolymerisate (IIR), Butadien/Acrylnitril-Copolymere mit Acrylnitrilgehalten von 5 bis 60, vorzugsweise 10 bis 50 Gew.-% (NBR), teilhydrierter oder vollständig hydrierter NBR-Kautschuk (HNBR), Ethylen/Propylen/Dien-Copolymerisate (EPDM), sowie Mischungen dieser Kautschuke.

Ferner kommen für Kautschukgemische mit den genannten Kautschuken die folgenden zusätzlichen Kautschuke in Frage: Carboxylkautschuke, Epoxidkautschuke, Trans-Polypentenamer, halogenierte Butylkautschuke, Kautschuke aus 2-Chlor-Butadien, EthylenVinylacetat-Copolymere, Ethylen-Propylen-Copolymere, gegebenenfalls auch chemische Derivate des Naturkautschuks sowie modifizierte Naturkautschuke.
Bevorzugte Synthesekautschuke sind beispielsweise bei W. Hofmann, "Kautschuktechnologie", Genter Verlag, Stuttgart 1980, beschrieben.
Für die Herstellung der erfindungsgemäßen Reifen sind insbesondere anionisch polymerisierte L-SBR-Kautschuke (Lösungs-SBR) mit einer Glasübergangstemperatur oberhalb von -50 °C sowie deren Mischungen mit Dienkautschuken von Interesse.

Die erfindungsgemäßen Kieselsäuren, mit oder ohne Silan, können Einsatz in allen Gummianwendungen, wie zum Beispiel Formkörper, Reifen, Reifenlaufflächen, Fördergurte, Förderbänder, Dichtungen, Treibriemen, Schläuche, Schuhsohlen, Kabelmäntel, Walzenbeläge, Dämpfungselemente etc. finden.

Die Einarbeitung dieser Kieselsäure und die Herstellung der dieses Kieselsäure enthaltenden Mischungen erfolgt in der in der Gummiindustrie üblichen Art und Weise auf einem Innenmischer oder Walzwerk bei bevorzugt 80 - 200 °C. Die Darreichungs- bzw. Einsatzform der Kieselsäuren kann sowohl als Pulver, kugelförmiges Produkt oder Granulat erfolgen. Auch hier unterscheiden sich die erfindungsgemäßen Kieselsäuren nicht von den bekannten hellen Füllstoffen.

Die erfindungsgemäßen Kautschukvulkanisate können weitere Kautschukhilfsstoffe in den üblichen Dosierungen enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerter, Metalloxide sowie Aktivatoren, wie Triethanolamin, Polyethylenglykol, Hexantriol. Diese Verbindungen sind in der Kautschukindustrie bekannt.
Die Kautschukhilfsmittel können in bekannten Mengen, die sich unter anderem nach dem Verwendungszweck richten, eingesetzt werden. Übliche Mengen sind zum Beispiel Mengen von 0.1 bis 50 Gew.-%, bezogen auf Kautschuk. Als Vernetzer können Schwefel oder schwefelspendende Substanzen eingesetzt werden. Die erfindungsgemäßen Kautschukmischungen können darüber hinaus Vulkanisationsbeschleuniger enthalten. Beispiele für geeignete Hauptbeschleuniger sind Mercaptobenzthiazole, Sulfenamide, Thiurame, Dithiocarbamate in Mengen von 0.5 bis 3 Gew.-%. Beispiele für Cobeschleuniger sind Guanidiene, Thioharnstoffe und Thiocarbonate in Mengen von 0.5 bis 5 Gew.-%. Schwefel kann üblicherweise in Mengen von 0.1 bis 10 Gew.-%, bevorzugt 1 bis 3 Gew.-%, bezogen auf Kautschuk, eingesetzt werden.

Die erfindungsgemäßen Kieselsäuren können in Kautschuken eingesetzt werden, die mit Beschleunigern und/ oder Schwefel, aber auch peroxidisch vernetzbar sind.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und der Organosiliziumverbindung kann in bekannten Mischaggregaten, wie Walzen, Innenmischern und Mischextrudern, durchgeführt werden.

Die erfindungsgemäßen, hochdispersiblen, hochoberflächigen Kieselsäuren haben den Vorteil, dass sie den Kautschukvulkanisaten einen verbesserten Abriebwiderstand aufgrund der höheren CTAB-Oberfläche verleihen. Zudem ist das Trockenhandling aufgrund der höheren dynamischen Steifigkeit bei 0 °C und 60 °C verbessert und der Rollwiderstand, angezeigt durch den erniedrigten tan $\delta$ (60 °C)-Wert, erniedrigt. In Analogie zu Carbon Blacks wird bei Verwendung dieser erfindungsgemäßen hochdispersiblen, hochoberflächigen Kieselsäuren ein verbessertes Cut & Chip und Chunking Verhalten erreicht (Definition und weitere Ausführungen siehe "New insights into the tear mechanism" und Referenzen hierin, präsentiert auf der Tire Tech 2003 in Hamburg von Dr. W. Niedermeier).

Die erfindungsgemäße Kautschukmischung ist insbesondere für die Herstellung von Reifenlaufflächen mit verbessertem niedrigerem Rollwiderstand, verbesserter Nassrutschfestigkeit, verbesserten Trockeneigenschaften und guten Abriebwiderstand gegenüber einer gleichen Kautschukmischung mit bisher bekannten Kieselsäuren geeignet. Diese Laufflächenmischungen sind besonders für Hochgeschwindigkeits-PKW- und Motorradreifen, aber auch Reifen für Nutzfahrzeuge mit erniedrigtem Rollwiderstand bei gutem Abriebwiderstand und verbessertem Cut & Chip und Chunking Verhalten geeignet.

Ferner eignen sich die erfindungsgemäßen Kieselsäuren, ohne dem Zusatz von Organosiliziumverbindungen, im Blend mit einem typischen Laufflächenruß auch zur Verbesserung des Cut & Chip Verhaltes von Bau-, Landmaschinen- und Grubenreifen.

Zur Erzielung eines guten Wertebildes in einer Polymermischung ist die Dispersion der Fällungskieselsäure in der Matrix, dem Polymer, von entscheidender Bedeutung. Dies kann durch den WK-Koeffizienten abgeschätzt werden.

Fig. 1 ist eine schematische Darstellung der für die Berechnung des WK-Koeffizienten nötigen Werte.

Die Kurven zeigen im Bereich um 1.0 - 100 $\mu$m ein erstes Maximum in der Partikelgrößenverteilung und im Bereich < 1.0 $\mu$m ein weiteres Maximum. Der Peak im Bereich 1.0 - 100 $\mu$m gibt den Anteil an unzerkleinerten Kieselsäurepartikeln nach der Ultraschallbehandlung an. Diese recht groben Partikel werden in den Kautschukmischungen schlecht dispergiert. Der zweite Peak mit deutlich kleineren Partikelgrößen (< 1.0 $\mu$m) gibt denjenigen Teil an Partikeln der Kieselsäure an, der während der Ultraschallbehandlung zerkleinert worden ist. Diese sehr kleinen Partikel werden in Kautschukmischungen ausgezeichnet dispergiert.

Der WK-Koeffizient ist nun das Verhältnis der Peakhöhe der nicht abbaubaren Partikel (B), deren Maximum im Bereich 1.0 - 100 $\mu$m (B') liegt, zur Peakhöhe der abgebauten Partikel (A), deren Maximum im Bereich < 1.0 $\mu$m (A') liegt.

Der WK-Koeffizient ist damit eine Maß für die "Abbaubarkeit" (=Dispergierbarkeit) der Fällungskieselsäure. Es gilt, eine Fällungskieselsäure ist umso leichter dispergierbar, je kleiner der WK-Koeffizient ist, d. h. je mehr Partikel bei der Einarbeitung in Kautschuk abgebaut werden.

Die erfindungsgemäßen Kieselsäuren weisen WK-Koeffizienten $\leq$ 3.4 bevorzugt $\leq$ 3.0, besonders bevorzugt $\leq$ 2.5 auf. Bekannte Fällungskieselsäuren haben andere WK-Koeffizienten und andere Maxima in den Partikelgrößenverteilungen gemessen mit dem Coulter LS 230 und sind somit schlechter dispergierbar.

Die physikalisch/chemischen Daten der erfindungsgemäßen Fällungskieselsäuren werden mit den folgenden Methoden bestimmt:

### Bestimmung der Feuchte von Kieselsäuren

Nach dieser Methode werden in Anlehnung an ISO 787-2 die flüchtigen Anteile (im folgenden der Einfachheit halber Feuchte genannt) von Kieselsäure nach 2 stündiger Trocknung bei 105 °C bestimmt. Dieser Trocknungsverlust besteht im allgemeinen überwiegend aus Wasserfeuchtigkeit.

### Durchführung

In ein trockenes Wägeglas mit Schliffdeckel (Durchmesser 8 cm, Höhe 3 cm) werden 10 g der pulverförmigen, kugelförmigen oder granulären Kieselsäure auf 0.1 mg genau eingewogen (Einwaage E). Die Probe wird bei geöffnetem Deckel 2 h bei 105 $\pm$ 2 °C in einem Trockenschrank getrocknet. Anschließend wird das Wägeglas verschlossen und in

einem Exsikkatorschrank mit Kieselgel als Trocknungsmittel auf Raumtemperatur abgekühlt. Die Auswaage A wird gravimetrisch bestimmt.
Man bestimmt die Feuchte in % gemäß ((E in g - A in g) * 100 %) / (E in g).

**Bestimmung: der modifizierten Scarszahl von Kieselsäuren**

Durch die Titration von Kieselsäure mit Kaliumhydroxid-Lösung im Bereich von pH 6 bis pH 9 läßt sich die modifizierte Searszahl (im folgenden Searszahl $V_2$ genannt) als Maß für die Zahl an freien Hydroxy-Gruppen bestimmen. Der Bestimmungsmethode liegen die folgenden chemischen Reaktionen zu Grunde, wobei "Si"-OH eine Silanolgruppe der Kieselsäure symbolisieren soll:

$$\text{"Si"-OH} + NaCl \rightarrow \text{"Si"-ONa} + HCl$$

$$HCl + KOH \rightarrow KCl + H_2O.$$

**Durchführung**

10.00 g einer pulverförmigen, kugelförmigen oder granulären Kieselsäure mit 5 ± 1 % Feuchte werden 60 Sekunden mit einer IKA-Universalmühle M 20 (550 W; 20 000 U/min) zerkleinert. Gegebenenfalls muß der Feuchtegehalt der Ausgangssubstanz durch Trocknen bei 105 °C im Trockenschrank oder gleichmäßiges Befeuchten eingestellt und die Zerkleinerung wiederholt werden. 2.50 g der so behandelten Kieselsäure werden bei Raumtemperatur in ein 250 ml Titriergefäß eingewogen und mit 60.0 ml Methanol p. A. versetzt. Nach vollständiger Benetzung der Probe werden 40.0 ml entionisiertes Wasser zugegeben und man dispergiert mittels eines Ultra Turrax T 25 Rührers (Rührwelle KV-18G, 18 mm Durchmesser) 30 Sekunden lang bei einer Drehzahl von 18 000 U/min. Mit 100 ml entionisiertem Wasser werden die am Gefäßrand und Rührer anhaftenden Probepartikel in die Suspension gespült und in einem thermostatisiertem Wasserbad auf 25 °C temperiert.

Das pH-Messgerät (Fa. Knick, Typ: 766 pH-Meter Calimatic mit Temperaturfühler) und die pH-Elektrode (Einstabmesskette der Fa. Schott, Typ N7680) werden unter Verwendung von Pufferlösungen (pH 7.00 und 9.00) bei Raumtemperatur kalibriert. Mit dem pH-Meter wird zunächst der Ausgangs-pH-Wert der Suspension bei 25 °C gemessen, danach wird je nach Ergebnis mit Kaliumhydroxid-Lösung (0.1 mol/1) bzw. Salzsäurelösung (0.1 mol/1) der pH-Wert auf 6.00 eingestellt. Der Verbrauch an KOH- bzw. HCl-Lösung in ml bis pH 6.00 entspricht $V_1$'.

Danach werden 20.0 ml Natriumchlorid-Lösung (250.00 g NaCl p. A. mit entionisiertem Wasser auf 1 1 aufgefüllt) zudosiert. Mit 0.1 mol/l KOH wird dann die Titration bis zum pH-Wert 9.00 fortgesetzt. Der Verbrauch an KOH-Lösung in ml bis pH 9.00 entspricht $V_2$'.

Anschliessend werden die Volumina $V_1$', bzw. $V_2$' zunächst auf die theoretische Einwaage von 1 g normiert und mit 5 erweitert, woraus sich $V_1$ und die Searszahl $V_2$ in den Einheiten ml/(5g) ergeben.

**Bestimmung der BET-Oberfläche**

Die spezifische Stickstoff-Oberfläche (im folgenden BET-Oberfläche genannt) der pulverförmigen, kugelförmigen oder granulären Kieselsäure wird gemäß ISO 5794-1/Annex D mit einem AREA-meter (Fa. Ströhlein, JUWE) bestimmt.

**Bestimmung der CTAB-Oberfläche**

Die Methode beruht auf der Adsorption von CTAB (N-Hexadecyl-N,N,N-trimethylammoniumbromid) an der "äußeren" Oberfläche der Kieselsäure, die auch als "kautschukwirksame Oberfläche" bezeichnet wird, in Anlehnung an die ASTM 3765, bzw. NFT 45-007 (Kapitel 5.12.1.3). Die Adsorption von CTAB erfolgt in wässriger Lösung unter Rühren und Ultraschallbehandlung. Überschüssiges, nicht adsorbiertes CTAB wird durch Rücktitration mit NDSS (Dioctylnatriumsulfosuccinat-Lösung, "Aerosol OT"-Lösung) mit einem Titroprozessor ermittelt, wobei der Endpunkt durch das Maximum der Trübung der Lösung gegeben ist und mit einer Phototrode bestimmt wird. Die Temperatur während aller durchgeführte Operationen beträgt 23 - 25 °C um das Auskristallisieren von CTAB zu verhindern. Der Rücktitration liegt die folgende Reaktionsgleichung zu Grunde:

$$(C_{20}H_{37}O_4)SO_3Na + BrN(CH_3)_3(C_{16}H_{33}) \Rightarrow (C_{20}H_{37}O_4)SO_3N(CH_3)_3(C_{16}H_{33}) + NaBr$$

NDSS CTAB

**Geräte**

Titroprozessor METTLER Toledo Typ DL 55 und Titroprozessor METTLER Toledo Typ DL 70, jeweils ausgerüstet mit: pH-Elektrode, Fabrikat Mettler, Typ DG 111 und Phototrode, Fabrikat Mettler, Typ DP 550
Titrierbecher 100 ml aus Polypropylen
Titrierglasgefäß, 150 ml mit Deckel
Druckfiltrationsgerät, 100 ml Inhalt
Membranfilter aus Cellulosenitrat, Porengröße 0.1 µm, 47 mm ∅, z. B. Whatman (Best. Nr. 7181-004)

**Reagenzien**

Die Lösungen von CTAB (0.015 mol/l in entionisiertem Wasser) und NDSS (0.00423 mol/l in entionisiertem Wasser) werden gebrauchsfertig bezogen (Fa. Kraft, Duisburg: Bestell-Nr. 6056.4700 CTAB-Lösung 0.015 mol/l; Bestell-Nr. 6057.4700 NDSS-Lösung 0.00423 mol/l), bei 25 °C aufbewahrt und innerhalb von einem Monat aufgebraucht.

**Durchführung**

**Blindtitration**

Der Verbrauch an NDSS-Lösung zur Titration von 5 ml CTAB-Lösung ist 1 x täglich vor jeder Meßreihe zu prüfen. Dazu wird die Phototrode vor Beginn der Titration auf 1000 ± 20 mV eingestellt (entsprechend einer Transparenz von 100 %).

Es werden genau 5.00 ml CTAB-Lösung in einen Titrierbecher pipettiert und man fügt 50.0 ml entionisiertes Wasser hinzu. Unter Rühren erfolgt die Titration mit NDSS-Lösung nach der dem Fachmann geläufigen Meßmethode mit dem Titroprozessor DL 55 bis zur max. Trübung der Lösung. Man bestimmt den Verbrauch $V_I$ an NDSS-Lösung in ml. Jede Titration ist als Dreifachbestimmung auszuführen.

**Adsorption**

10.0 g der pulverförmigen, kugelförmigen oder granulierten Kieselsäure mit einem Feuchtegehalt von 5 ± 2 % (gegebenenfalls wird der Feuchtegehalt durch Trocknen bei 105 °C im Trockenschrank oder gleichmäßiges Befeuchten eingestellt) werden mit einer Mühle (Fa. Krups, Model KM 75, Artikel Nr. 2030-70) 30 Sekunden lang zerkleinert. Genau 500.0 mg der zerkleinerten Probe werden in ein 150 ml Titriergefäß mit Magnetrührstäbchen überführt und es werden genau 100.0 ml CTAB-Lösung zudosiert. Das Titriergefäß wird mit einem Deckel verschlossen und 15 Minuten mit einem Magnetrührer gerührt. Hydrophobe Kieselsäuren werden mit einem Ultra Turrax T 25 Rührer (Rührwelle KV-18G, 18 mm Durchmesser) bei 18 000 U/min maximal 1 min lang bis zur vollständigen Benetzung gerührt. Das Titriergefäß wird an den Titroprozessor DL 70 geschraubt und der pH-Wert der Suspension wird mit KOH (0.1 mol/l) auf einen Wert von 9 ± 0.05 eingestellt. Es erfolgt eine 4 minütige Beschallung der Suspension in dem Titriergefäß in einem Ultraschallbad (Fa. Bandelin, Sonorex RK 106 S, 35 kHz) bei 25 °C. Anschließend erfolgt eine umgehende Druckfiltration durch einen Membranfilter bei einem Stickstoffdruck von 1.2 bar. Der Vorlauf von 5 ml wird verworfen.

**Titration**

5.00 ml des übrigen Filtrats werden in einen 100 ml Titrierbecher pipettiert und mit entionisiertem Wasser auf 50.00 ml aufgefüllt. Der Titrierbecher wird an den Titroprozessor DL 55 geschraubt und unter Rühren erfolgt die Titration mit NDSS-Lösung bis zur maximalen Trübung. Man bestimmt den Verbrauch Vn an NDSS-Lösung in ml. Jede Trübung ist als Dreifachbestimmung auszuführen.

**Berechnung**

Mit Hilfe der Meßwerte

$V_I$ = Verbrauch an NDSS-Lösung in ml bei der Titration der Blindprobe
$V_{II}$ = Verbrauch an NDSS-Lösung in ml bei Verwendung des Filtrats

ergibt sich:

$V_I/V_{II}$ = Stoffmenge CTAB der Blindprobe / noch vorhandene Stoffmenge CTAB in der Filtratprobe.

Daraus folgt für die adsorbierte Stoffmenge N an CTAB in g:

$$N = ((V_I - V_{II}) * 5.5 \text{ g} * 5 \text{ ml}) / (V_I * 1000 \text{ ml}).$$

Da von 100 ml Filtrat nur 5 ml titriert wurden, 0.5 g Kieselsäure einer definierten Feuchte eingesetzt wurden und der Platzbedarf von 1 g CTAB 578435 * $10^{-3}$ $m^2$ beträgt, folgt daraus:

CTAB-Oberfläche (nicht wasserkorrigiert) in $m^2/g$ = (N * 20 * 578.435 $m^2/g$) / (0.5 g) und
CTAB-Oberfläche (nicht wasserkorrigiert) in $m^2/g$ = (($V_I$ - $V_{II}$) * 636.2785 $m^2/g$) / $V_I$.

Die CTAB-Oberfläche wird auf die wasserfreie Kieselsäure bezogen, weshalb die folgende Korrektur durchgeführt wird.

CTAB-Oberfläche in $m^2/g$ = (CTAB-Oberfläche (nicht wasserkorrigiert) in $m^2/g$ * 100 %) / (100 % - Feuchte in %).

**<u>Bestimmung der DBP-Aufnahme</u>**

Die DBP-Aufnahme (DBP-Zahl), die ein Maß für die Saugfähigkeit der Fällungskieselsäure ist, wird in Anlehnung an die Norm DIN 53601 wie folgt bestimmt:

**Durchführung**

12.50 g pulverförmige oder kugelförmige Kieselsäure mit 0 - 10 % Feuchtegehalt (gegebenenfalls wird der Feuchtegehalt durch Trocknen bei 105 °C im Trockenschrank eingestellt) werden in die Kneterkammer (Artikel Nummer 279061) des Brabender-Absorptometer "E" gegeben. Im Falle von Granulaten wird die Siebfraktion von 3.15 bis 1 mm (Edelstahlsiebe der Fa. Retsch) verwendet (durch sanftes Drücken der Granulate mit einem Kunststoffspatel durch das Sieb mit 3.15 mm Porenweite). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0.6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.

**Auswertung**

Die DBP-Aufnahme wird in g/(100 g) angegeben und anhand der folgenden Formel aus dem gemessenen DBP-Verbrauch berechnet. Die Dichte von DBP beträgt bei 20 °C typischer Weise 1.047 g/ml.

$$\text{DBP-Aufnahme in g/(100 g)} = ((\text{Verbrauch an DBP in ml}) * (\text{Dichte des DBP in g/ml}) * 100) / (12.5 \text{ g}).$$

Die DBP-Aufnahme ist für die wasserfreie, getrocknete Kieselsäure definiert. Bei Verwendung von feuchten Fällungskieselsäuren ist der Wert mittels der folgenden Korrekturtabelle zu korrigieren. Der Korrekturwert entsprechend dem Wassergehalt wird zu dem experimentell bestimmten DBP-Wert addiert; z. B. würde ein Wassergehalt von 5.8 % einen Zuschlag von 33 g/(100 g) für die DBP-Aufnahme bedeuten.

**Korrekturtabelle für Dibutylphthalataufnahme -wasserfrei-**

| % Wasser | .% Wasser<br>.0 | .2 | .4 | .6 | .8 |
|---|---|---|---|---|---|
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

**Bestimmung des WK-Koeffizienten: Aggregatgrößenverteilung mittels Laserbeugung: Probenvorbereitung**

Handelt es sich bei der zu vermessenden Kieselsäure um Granulate, so werden 5 g der granulären Kieselsäure in ein Becherglas gegeben und die grobkörnigen Granulatstücke mit einem Pistill zerdrückt aber nicht gemörsert. 1.00 g der zerdrückten, pulverförmigen oder kugelförmigen Kieselsäure mit 5 $\pm$ 1 % Feuchtegehalt (gegegebenfalls wird der Feuchtegehalt durch Trocknen bei 105 °C im Trockenschrank oder gleichmäßiges Befeuchten eingestellt), deren Herstellung maximal 10 Tage zurückliegt, wird in ein 30 ml Zentrifugenglas mit gewölbten Boden (Höhe 7 cm, ∅ 3 cm, Tiefe der konvexen Wölbung 1 cm) eingewogen und mit 20.0 ml Dispersionslösung (Hydrophile Kieselsäuren: 20.0 g Natriumhexametaphosphat (Fa. Baker) auf 1000 ml mit entionisiertem Wasser aufgefüllt; Hydrophobe Kieselsäuren: 200.0 ml Ethanol p. A. mit 2.0 ml 25 %iger Ammoniaklösung und 0.50 g Triton X-100 (Fa. Merck) auf 1000 ml mit entionisiertem Wasser aufgefüllt) versetzt. Anschließend wird das Zentrifugenglas in ein doppelwandiges Glaskühlgefäß (80 ml Fassungsvermögen, Höhe 9 cm, ∅ 3.4 cm) mit Kühlwasseranschlüssen für Leitungswasser (20 °C) gestellt und die Probe 270 s mit einem Ultraschallfinger (Fa. Bandelin, Typ UW 2200 mit Horn DH 13 G und Diamantteller ∅ 13 mm) behandelt. Dazu wird an dem Netzteil (Sonopuls, Fa. Bandelin, Typ HD 2200) des Ultraschallfingers 50 % Power und 80 % Pulse (entspricht 0.8 s Power und 0.2 s Pause) eingestellt. Durch die Wasserkühlung wird eine Erwärmung der Suspension von maximal 8 °C gewährleistet. Bis die Probenzugabe in das Flüssigkeitsmodul des Laserbeugungsgeräts innerhalb von 15 min erfolgt, wird die Suspension mit einem Magnetrührer gerührt, um eventuelle Sedimentation zu verhindern.

**Durchführung**

Vor Beginn der Messung lässt man das Laserbeugungsgerät LS 230 (Fa. Coulter) und das Flüssigkeitsmodul (LS Variable Speed Fluid Module Plus mit integriertem Ultraschallfinger CV 181, Fa. Coulter) 2 h warmlaufen und spült das Modul (Menüleiste "Steuerung/Spülen") 10 min lang. In der Steuerleiste der Gerätesoftware wählt man über dem Menüpunkt "Messungen" das Dateifenster "Opt. Modell berechnen" aus und legt die Brechungsindizes in einer .rfd-Datei wie folgt fest: Flüssigkeitsbrechungsindex B. I. Real = 1.332; Material Brechungsindex Real = 1.46; Imaginär = 0.1. In dem Dateifenster "Messzyklus" stellt man die Leistung der Pumpgeschwindigkeit auf 26 % und die Ultraschalleistung des intergrierten Ultraschallfingers CV 181 auf 3 ein. Die Punkte Ultraschall "während der Probenzugabe", "vor jeder Messung 10 Sekunden" und "während der Messung" sind zu aktivieren. Zusätzlich wählt man in diesem Dateifenster die folgenden Punkte aus: Offsetmessung, Justieren, Hintergrundmessung, Messkonz. einstellen, Probeninfo eingeben, Messinfo eingeben, 2 Messungen starten, Autom. Spülen, Mit PIDS Daten.

Nach Abschluss der Kalibrierungsmessung mit einem LS Size Control G15 Standard (Fa. Coulter) und der Hintergrundmessung, erfolgt die Probenzugabe. Man fügt so lange suspendierte Kieselsäure hinzu, bis eine Lichtabsorption von 45 - 55 % erreicht ist und das Gerät "OK" meldet.

Die Messung erfolgt bei Raumtemperatur mit dem Auswertemodell der oben festgelegten .rfd-Datei. Von jeder

Kieselsäureprobe werden drei Doppelbestimmungen von jeweils 60 Sekunden mit einer Wartezeit von 0 Sekunden durchgeführt.

Aus der Rohdatenkurve berechnet die Software auf Basis der Volumenverteilung unter Berücksichtigung der Mie-Theorie und dem optischen Modell von Fraunhofer die Teilchengrößenverteilung. Typischer Weise findet man eine bimodale Verteilungskurve mit einem Modus A zwischen 0 - 1 μm (Maximum bei ca. 0.2 μm) und einem Modus B zwischen 1 - 100 μm (Maximum bei ca. 5 μm). Gemäß der Figur 1 läßt sich daraus der WK-Koeffizient bestimmen, welcher als Mittelwert aus sechs Einzelmessungen angegeben wird.

**pH-Wert-Bestimmung**

Das Verfahren in Anlehnung an DIN EN ISO 787-9 dient zur Bestimmung des pH-Wertes einer wässrigen Suspension von Kieselsäuren bei 20 °C. Dazu wird eine wässrige Suspension der zu untersuchenden Probe hergestellt. Nach kurzzeitigem Schütteln der Suspension wird deren pH-Wert mittels eines zuvor kalibrierten pH-Meters bestimmt.

**Durchführung**

Vor der Durchführung der pH-Messung ist das pH-Messgerät (Fa. Knick, Typ: 766 pH-Meter Calimatic mit Temperaturfühler) und die pH-Elektrode (Einstabmesskette der Fa. Schott, Typ N7680) täglich unter Verwendung der Pufferlösungen bei 20 °C zu kalibrieren. Die Kalibrierungsfunktion ist so zu wählen, dass die zwei verwendeten Pufferlösungen den erwarteten pH-Wert der Probe einschließen (Pufferlösungen mit pH 4.00 und 7.00, pH 7.00 und pH 9.00 und ggf. pH 7.00 und 12.00). Bei Verwendung von Granulaten werden zunächst 20.0 g Kieselsäure mittels einer Mühle (Fa. Krups, Modell KM 75, Artikel Nr. 2030-70) 20 s lang zerkleinert.

5.00 g pulverförmige oder kugelförmige Kieselsäure mit 5 ± 1 % Feuchtegehalt (gegegebenfalls wird der Feuchtegehalt durch Trocknen bei 105 °C im Trockenschrank oder gleichmäßiges Befeuchten vor der evtl. Zerkleinerung eingestellt) werden auf einer Präzisionswaage auf 0.01 g genau in eine zuvor tarierte Glas-Weithalsflasche eingewogen. 95.0 ml entionisiertes Wasser werden zu der Probe gegeben. Anschließend wird die Suspension im verschlossenen Gefäß für die Dauer von 5 Minuten mittels einer Schüttelmaschine (Fa. Gerhardt, Modell LS10, 55 W, Stufe 7) bei Raumtemperatur geschüttelt. Die Messung des pH-Wertes erfolgt direkt im Anschluss an das Schütteln. Dazu wird die Elektrode zunächst mit entionisierten Wasser, nachfolgend mit einem Teil der Suspension abgespült und anschließend in die Suspension eingetaucht. Nach Zugabe eines Magnetfisches in die Suspension wird bei einer konstanten Rührgeschwindigkeit mit leichter Trombenbildung der Suspension die pH-Messung durchgeführt. Wenn das pH-Meter einen gleichbleibenden Wert anzeigt, wird der pH-Wert an der Anzeige abgelesen.

Bei der Verwendung von hydrophober Kieselsäure erfolgt die Durchführung analog, allerdings werden dann 5.00 g der evtl. zerkleinerten Probe mit 5 ± 1 % Feuchtegehalt auf der Präzisionswaage auf 0.01 g genau in eine zuvor tarierte Glas-Weithalsflasche eingewogen. Es werden 50.0 ml Methanol p. A. und 50.0 ml entionisiertes Wasser hinzugegeben und anschließend wird die Suspension im verschlossenen Gefäß für die Dauer von 5 Minuten mittels einer Schüttelmaschine (Fa. Gerhardt, Modell LS10, 55 W, Stufe 7) bei Raumtemperatur geschüttelt. Die Messung des pH-Wertes erfolgt ebenfalls unter Rühren, allerdings nach exakt 5 min.

**Bestimmung des Feststoffgehalts von Filterkuchen**

Nach dieser Methode wird der Feststoffgehalt von Filterkuchen durch Entfernen der flüchtigen Anteile bei 105 °C bestimmt.

**Durchführung**

In eine trockene, tarierte Porzellanschale (Durchmesser 20 cm) werden 100.00 g des Filterkuchens eingewogen (Einwaage E). Gegebenenfalls wird der Filterkuchen mit einem Spatel zerkleinert, um lockere Brocken von maximal 1 $cm^3$ zu erhalten. Die Probe wird bei 105 ± 2 °C in einem Trockenschrank bis zur Gewichtskonstanz getrocknet. Anschließend wird die Probe in einem Exsikkatorschrank mit Kieselgel als Trocknungsmittel auf Raumtemperatur abgekühlt. Die Auswaage A wird gravimetrisch bestimmt.

Man bestimmt die Feststoffgehalt in % gemäß 100 % - (((E in g - A in g) * 100 %) / (E in g)).

**Bestimmung der elektrischen Leitfähigkeit**

Die Bestimmung der elektrischen Leitfähigkeit (LF) von Kieselsäuren wird in wässriger Suspension durchgeführt.

**Durchführung**

Bei Verwendung von Granulaten werden zunächst 20.0 g Kieselsäure mittels einer Mühle (Fa. Krups, Modell KM 75, Artikel Nr. 2030-70) 20 s lang zerkleinert. 4.00 g pulverförmige oder kugelförmige Kieselsäure mit 5 ± 1 % Feuchtegehalt (gegebenenfalls wird der Feuchtegehalt durch Trocknen bei 105 °C im Trockenschrank oder gleichmäßiges Befeuchten vor der evtl. Zerkleinerung eingestellt) werden in 50.0 ml entionisiertem Wasser suspendiert und 1 min auf 100 °C erhitzt. Die auf 20 °C abgekühlte Probe wird auf genau 100 ml aufgefüllt und durch Umschütteln homogenisiert.

Die Meßzelle des Leitfähigkeitsmeßgeräts LF 530 (Fa. WTW) wird mit einer kleinen Probenmenge gespült, bevor die Meßzelle LTA01 in die Suspension getaucht wird. Der am Display angezeigte Wert entspricht der Leitfähigkeit bei 20 °C, da der externe Temperaturfühler TFK 530 eine automatische Temperaturkompensation durchführt. Dieser Temperaturkoeffizient als auch die Zellenkonstante k sind vor jeder Meßreihe zu überprüfen.

Als Kalibrierlösung wird 0.01 mol/l Kaliumchlorid-Lösung verwendet (LF bei 20 °C = 1278 µS/cm).

**Patentansprüche**

1. Fällungskieselsäure, **gekennzeichnet durch**

| | |
|---|---|
| BET-Oberfläche | 178 - 257 $m^2/g$ |
| CTAB-Oberfläche | ≥ 170 $m^2/g$ |
| DBP-Zahl | 207 - 276 g/(100 g) |
| Searszahl $V_2$ | 20 - 35 ml/(5 g). |

2. Fällungskieselsäure nach Anspruch 1,
**dadurch gekennzeichnet,**
**dass** die CTAB-Oberfläche maximal 300 $m^2/g$ beträgt.

3. Fällungskieselsäure nach einem der Ansprüche 1 oder 2,
**dadurch gekennzeichnet,**
**dass** die Fällungskieselsäure einen WK-Koeffizient von ≤ 3.4 (Verhältnis der Peakhöhe der durch Ultraschall nicht abbaubaren Partikel im Größenbereich 1.0 - 100 µm zur Peakhöhe der abgebauten Partikel im Größenbereich < 1.0 µm) aufweist.

4. Fällungskieselsäuren nach einem der Ansprüche 1 bis 3,
**dadurch gekennzeichnet,**
**dass** ihre Oberflächen mit Organosilanen der Formel I bis III modifiziert sind:

$$[SiR^1_n(RO)_r(Alk)_m(Ar)_p]_q[B] \qquad (I),$$

$$SiR^1_n(RO)_{3-n}(Alkyl) \qquad (II),$$

oder

$$SiR^1_n(RO)_{3-n}(Alkenyl) \qquad (III),$$

in denen bedeuten

B: -SCN, -SH, -Cl, $-NH_2$, $-OC(O)CHCH_2$, $-OC(O)C(CH_3)CH_2$ (wenn q = 1) oder $-S_w-$ (wenn q = 2), wobei B chemisch and Alk gebunden ist,
R und $R^1$: aliphatischer, olefinischer, aromatischer oder arylaromatischer Rest mit 2 - 30 C-Atomen, der optional mit den folgenden Gruppen substituiert sein kann: Hydroxy-, Amino-, Alkoholat-, Cyanid-, Thiocyanid-, Halogen-, Sulfon-säure-, Sulfonsäureester-, Thiol-, Benzoesäure-, Benzoesäureester-, Carbonsäure-, Carbonsäureester-, Acrylat-, Metacrylat-, Organosilanrest, wobei R und $R^1$ eine gleiche oder verschiedene Bedeutung oder Substituierung haben können.
n: 0, 1 oder 2,

Alk: einen zweiwertigen unverzweigten oder verzweigten Kohlenwasserstoffrest mit 1 bis 6 Kohlenstoffatomen,
m: 0 oder 1,
Ar: einen Arylrest mit 6 bis 12 C-Atomen, bevorzugt 6 C-Atomen, der mit den folgenden Gruppen substituiert sein kann: Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Acrylat-, Metacrylat-, Organosilanrest,
p: 0 oder 1, mit der Maßgabe, dass p und n nicht gleichzeitig 0 bedeuten,
q: 1 oder 2,
w: eine Zahl von 2 bis 8,
r: 1, 2 oder 3, mit der Maßgabe, dass r + n + m + p = 4,
Alkyl: einen einwertigen unverzweigten oder verzweigten gesättigten Kohlenwasserstoffrest mit 1 bis 20 Kohlenstoffatomen, bevorzugt 2 bis 8 Kohlenstoffatomen,
Alkenyl: einen einwertigen unverzweigten oder verzweigten ungesättigten Kohlenwasserstoffrest mit 2 bis 20 Kohlenstoffatomen, bevorzugt 2 bis 8 Kohlenstoffatomen.

**5.** Verfahren zur Herstellung einer Fällungskieselsäure mit einer

| | |
|---|---|
| BET-Oberfläche | 178 - 257 $m^2/g$ |
| CTAB-Oberfläche | ≥ 170 $m^2/g$ |
| DBP-Zahl | 207 - 276 g/(100 g) |
| Searszahl $V_2$ | 20 - 35 ml/(5 g) |

wobei

a) eine wässrige Lösung eines Alkali-oder Erdalkalisilikats, und/oder einer organischen und/oder anorganischen Base mit einem pH 7 - 8.5 vorgelegt
b) in diese Vorlage unter Rühren bei 55 - 95 °C für 10 - 120 Minuten gleichzeitig Wasserglas und ein Säuerungsmittel dosiert,
e) mit einem Säuerungsmittel auf einen pH-Wert von ca. 3.5 angesäuert und
f) filtriert und getrocknet wird.

**6.** Verfahren nach Anspruch 5,
**dadurch gekennzeichnet,**
**dass** zwischen Schritt b) und e) die Schritte

c) Stoppen der Zudosierung für 30 - 90 Minuten unter Einhaltung der Temperatur und
d) gleichzeitiges Zudosieren von Wasserglas und einem Säuerungsmittel bei gleicher Temperatur unter Rühren für 20 -120 Minuten

durchgeführt werden.

**7.** Verfahren nach Anspruch 6,
**dadurch gekennzeichnet,**
**dass** das Säuerungsmittel und/oder das Wasserglas in den Schritten b) und d) jeweils die gleiche Konzentration oder Zulaufgeschwindigkeit aufweisen.

**8.** Verfahren nach Anspruch 6,
**dadurch gekennzeichnet,**
**dass** das Säuerungsmittel und/oder das Wasserglas in den Schrittten b) und d) jeweils eine andere Konzentration oder Zulaufgeschwindigkeit aufweisen.

**9.** Verfahren nach Anspruch 8,
**dadurch gekennzeichnet,**
**dass** bei gleicher Konzentration das Säuerungsmittel und/oder das Wasserglas in den Schritten b) und d) deren Zulaufgeschwindigkeit in Schritt d) 125 - 140 % der Zulaufgeschwindigkeit in Schritt b) beträgt.

**10.** Verfahren nach einem der Ansprüche 5 bis 9,

**dadurch gekennzeichnet,**
**dass** zur Trocknung ein Stromtrockner, Sprühtrockner, Etagentrockner, Bandtrockner, Drehrohrtrockner, Flash-Trockner, Spin-Flash-Trockner oder Düsenturm eingesetzt wird.

**11.** Verfahren nach Anspruch 5 bis 10,
**dadurch gekennzeichnet,**
**dass** nach der Trocknung eine Granulation mit einem Walzenkompaktor durchgeführt wird.

**12.** Verfahren nach einem der Ansprüche 5 bis 11,
**dadurch gekennzeichent,**
dass während der Schritte b) und/oder d) eine Zugabe eines organischen oder anorganischen Salzes erfolgt.

**13.** Verfahren nach einem der Ansprüche 5 bis 12,
**dadurch gekennzeichnet,**
**dass** man die granulierten oder ungranulierten Fällungskieselsäuren mit Organosilanen in Mischungen von 0.5 bis 50 Teilen, bezogen auf 100 Teile Fällungskieselsäure, insbesondere 1 bis 15 Teile, bezogen auf 100 Teile Fällungskieselsäure modifiziert, wobei die Reaktion zwischen Fällungskieselsäure und Organosilan während der Mischungsherstellung (in situ) oder außerhalb durch Aufsprühen und anschließendes Tempern der Mischung oder durch Mischen des Organosilans und der Kieselsäuresuspension mit anschließender Trocknung und Temperung durchgeführt wird.

**14.** Elastomerenmischungen, Vulkanisierbare Kautschukmischungen und/oder Vulkanisate, die die Fällungskieselsäure gemäß einem der Ansprüche 1 bis 4 enthalten.

**15.** Reifen, enthaltend Fällungskieselsäure nach einem der Ansprüche 1 bis 4.

**16.** Reifen für Nutzfahrzeuge, enthaltend Fällungskieselsäure nach einem der Ansprüche 1 bis 4.

**17.** Motonradreifen, enthaltend Fällungskieselsäure nach einem der Ansprüche 1 bis 4.

**18.** Reifen für Hochgeschwindigkeitsfahrzeuge enthaltend Fällungskieselsäure nach einem der Ansprüche 1 bis 4.

## Claims

**1.** Precipitated silica **characterized by**

| | |
|---|---|
| BET surface area | 178 - 257 $m^2/g$ |
| CTAB surface area | ≥ 170 $m^2/g$ |
| DBP number | 207 - 276 g/(100 g) |
| Sears number $V_2$ | 20-35 ml/(5 g). |

**2.** Precipitated silica according to Claim 1, **characterized in that** the CTAB surface area is not more than 300 $m^2/g$.

**3.** Precipitated silica according to either of Claims 1 and 2, **characterized in that** the precipitated silica has a WK coefficient of ≤ 3.4 (ratio of the peak height of the particles which cannot be broken down by ultrasound in the size range 1.0 - 100 μm to the peak height of the broken-down particles in the size range <1.0 μm).

**4.** Precipitated silicas according to any of Claims 1 to 3, **characterized in that** their surfaces have been modified with organosilanes of the formulae I to III:

$$[SiR^1_n(RO)_r(Alk)_m(Ar)_p]_q[B] \qquad (I),$$

$$SiR^1_n(RO)_{3-n}(Alkyl) \qquad (II),$$

or

$SiR^1_n(RO)_{3-n}(Alkenyl)$ (III),

where

B is -SCN, -SH, -Cl, $-NH_2$, $-OC(O)CHCH_2$, $-OC(O)C(CH_3)CH_2$ (if q = 1) or $-S_w$ (if q = 2), B being chemically bonded to Alk,
R and $R^1$ are aliphatic, olefinic, aromatic or arylaromatic radicals having 2 - 30 carbon atoms which may optionally be substituted by the following groups: hydroxyl, amino, alkoxide, cyanide, thiocyanide, halogen, sulfonic acid, sulfonic ester, thiol, benzoic acid, benzoic ester, carboxylic acid, carboxylic ester, acrylate, meth- acrylate, organosilane radicals, it being possible for R and $R^1$ to have an identical or different definition or substitution,
n is 0, 1 or 2,
Alk is a divalent unbranched or branched hydrocarbon radical having from 1 to 6 carbon atoms,
m is 0 or 1,
Ar is an aryl radical having from 6 to 12 carbon atoms, preferably 6 carbon atoms, which may be substituted by the following groups: hydroxyl, amino, alkoxide, cyanide, thiocyanide, halogen, sulfonic acid, sulfonic ester, thiol, benzoic acid, benzoic ester, carboxylic acid, carboxylic ester, acrylate, methacrylate, organosilane radicals,
p is 0 or 1 with the proviso that p and n are not simultaneously 0,
q is 1 or 2,
w is a number from 2 to 8,
r is 1, 2 or 3, with the proviso that r + n + m + p = 4,
Alkyl is a monovalent unbranched or branched saturated hydrocarbon radical having from 1 to 20 carbon atoms, preferably from 2 to 8 carbon atoms, and
Alkenyl is a monovalent unbranched or branched unsaturated hydrocarbon radical having from 2 to 20 carbon atoms, preferably from 2 to 8 carbon atoms.

**5.** Process for preparing a precipitated silica having a

| | |
|---|---|
| BET surface area | 178 - 257 $m^2/g$ |
| CTAB surface area | ≥ 170 $m^2/g$ |
| DBP number | 207 - 276 g/(100 g) |
| Sears number $V_2$ | 20-35 ml/(5 g) |

in which

a) an aqueous solution of an alkali metal silicate or alkaline earth metal silicate and/or of an organic and/or inorganic base with pH 7 - 8.5 is introduced as initial charge,
b) waterglass and an acidifier are metered simultaneously into this initial charge with stirring at 55 - 95°C for 10 - 120 minutes,
e) the mixture is acidified with an acidifier to a pH of approximately 3.5, and
f) is filtered and dried.

**6.** Process according to Claim 5, **characterized in that** between steps b) and e) the steps of

c) stopping of the metered addition for 30-90 minutes, during which the temperature is maintained, and
d) simultaneous metered addition of waterglass and an acidifier at the same temperature with stirring for 20 - 120 minutes

are carried out.

**7.** Process according to Claim 6, **characterized in that** the acidifier and/or the waterglass in steps b) and d) each have the same concentration or rate of addition.

**8.** Process according to Claim 6, **characterized in that** the acidifier and/or the waterglass in steps b) and d) each have a different concentration or rate of addition.

**9.** Process according to Claim 8, **characterized in that**, where the acidifier and/or the waterglass have the same

concentration in steps b) and d), their rate of addition in step d) is 125 - 140% of the rate of addition in step b).

**10.** Process according to any of Claims 5 to 9, **characterized in that** drying is carried out using a pneumatic conveying drier, spray drier, rack drier, belt drier, rotary tube drier, flash drier, spin-flash drier or nozzle tower.

**11.** Process according to any of Claims 5 to 10, **characterized in that** drying is followed by granulation with a roll compactor.

**12.** Process according to any of Claims 5 to 11, **characterized in that** during steps b) and/or d) an organic or inorganic salt is added.

**13.** Process according to any of Claims 5 to 12, **characterized in that** the granulated or ungranulated precipitated silicas are modified with organosilanes in mixtures of from 0.5 to 50 parts per 100 parts of precipitated silica, in particular from 1 to 15 parts per 100 parts of precipitated silica, the reaction between precipitated silica and organosilane being carried out during the preparation of the mixture (in situ) or outside by spray application and subsequent thermal conditioning of the mixture or by mixing the organosilane and the silica suspension with subsequent drying and thermal conditioning.

**14.** Elastomer compounds, vulcanizable rubber compounds and/or vulcanizates comprising the precipitated silica of any of Claims 1 to 4.

**15.** Tires comprising precipitated silica according to any of Claims 1 to 4.

**16.** Tires for commercial vehicles, comprising precipitated silica according to any of Claims 1 to 4.

**17.** Motorbike tires comprising precipitated silica according to any of Claims 1 to 4.

**18.** Tires for high-speed vehicles, comprising precipitated silica according to any of Claims 1 to 4.

## Revendications

**1.** Silice précipitée, **caractérisée par**

| | |
|---|---|
| Surface BET | 178 à 257 $m^2/g$ |
| Surface CTAB | $\geq$ 170 $m^2/g$ |
| Indice DBP | 207 à 276 g/(100 g) |
| Nombre de Sears $V_2$ | 20 à 35 ml/(5 g). |

**2.** Silice précipitée selon la revendication 1, **caractérisée en ce que** la surface CTAB est d'au plus 300 $m^2/g$.

**3.** Silice précipitée selon l'une quelconque des revendications 1 ou 2, **caractérisée en ce que** la silice précipitée présente un coefficient WK $\leq$ 3,4 (rapport entre la hauteur de pic des particules non décomposables par ultrasons dans la plage de taille allant de 1,0 à 100 $\mu$m et la hauteur de pic des particules décomposées dans la plage de taille < 1,0 $\mu$m).

**4.** Silices précipitées selon l'une quelconque des revendications 1 à 3, **caractérisées en ce que** leurs surfaces sont modifiées avec des organosilanes de formule I à III :

$$[SiR^1_n(RO)_r(Alk)_m(Ar)_p]_q[B] \qquad (I),$$

$$SiR^1_n(RO)_{3-n}(Alkyle) \qquad (II),$$

$$SiR^1_n(RO)_{3-n}(Alcényle) \qquad (III),$$

dans lesquelles

B signifie : -SCN, -SH, -Cl, $-NH_2$, $-OC(O)CHCH_2$, $-OC(O)C(CH_3)CH_2$ (lorsque q = 1) ou $-S_w-$ (lorsque q = 2), B étant relié chimiquement à Alk,
R et $R^1$ signifient : radical aliphatique, oléfinique, aromatique ou arylaromatique de 2 à 30 atomes C, qui peut éventuellement être substitué avec les groupes suivants : radical hydroxy, amino, alcoolate, cyanure, thiocyanure, halogène, acide sulfonique, ester de l'acide sulfonique, thiol, acide benzoïque, ester de l'acide benzoïque, acide carboxylique, ester de l'acide carboxylique, acrylate, méthacrylate, organosilane, R et $R^1$ pouvant avoir une signification ou une substitution identique ou différente,
n signifie : 0, 1 ou 2,
Alk signifie : un radical hydrocarboné bivalent ramifié ou non ramifié de 1 à 6 atomes de carbone,
m signifie : 0 ou 1,
Ar signifie : un radical aryle de 6 à 12 atomes C, de préférence de 6 atomes C, qui peut être substitué avec les groupes suivants : radical hydroxy, amino, alcoolate, cyanure, thiocyanure, halogène, acide sulfonique, ester de l'acide sulfonique, thiol, acide benzoïque, ester de l'acide benzoïque, acide carboxylique, ester de l'acide carboxylique, acrylate, méthacrylate, organosilane,
p signifie : 0 ou 1, à condition que p et n ne signifient pas simultanément 0,
q signifie : 1 ou 2,
w signifie : un nombre de 2 à 8,
r signifie : 1, 2 ou 3, à condition que r + n + m + p = 4,
Alkyle signifie : un radical hydrocarboné monovalent saturé ramifié ou non ramifié de 1 à 20 atomes de carbone, de préférence de 2 à 8 atomes de carbone,
Alcényle signifie : un radical hydrocarboné monovalent insaturé ramifié ou non ramifié de 2 à 20 atomes de carbone, de préférence de 2 à 8 atomes de carbone.

**5.** Procédé de fabrication d'une silice précipitée présentant

| | |
|---|---|
| Surface BET | 178 à 257 $m^2/g$ |
| Surface CTAB | ≥ 170 $m^2/g$ |
| Indice DBP | 207 à 276 g/(100 g) |
| Nombre de Sears $V_2$ | 20 à 35 ml/(5 g) |

selon lequel

a) une solution aqueuse d'un silicate alcalin ou alcalino-terreux et/ou d'une base organique et/ou inorganique d'un pH de 7 à 8,5 est chargée initialement,
b) du verre soluble et un acidifiant sont ajoutés simultanément à cette charge initiale sous agitation à une température de 55 à 95°C pendant 10 à 120 minutes, e) le mélange est acidifié à un pH d'environ 3,5 avec un acidifiant, puis
f) filtré et séché.

**6.** Procédé selon la revendication 5, **caractérisé en ce que** les étapes

c) arrêt de l'ajout pendant 30 à 90 minutes en maintenant la température et
d) ajout simultané de verre soluble et d'un acidifiant à la même température sous agitation pendant 20 à 120 minutes

sont réalisées entre l'étape b) et l'étape e).

**7.** Procédé selon la revendication 6, **caractérisé en ce que** l'acidifiant et/ou le verre soluble présentent à chaque fois la même concentration ou vitesse d'alimentation dans les étapes b) et d).

**8.** Procédé selon la revendication 6, **caractérisé en ce que** l'acidifiant et/ou le verre soluble présentent à chaque fois une autre concentration ou vitesse d'alimentation dans les étapes b) et d).

**9.** Procédé selon la revendication 8, **caractérisé en ce qu'**à une même concentration de l'acidifiant et/ou du verre soluble dans les étapes b) et d), leur vitesse d'alimentation dans l'étape d) est 125 à 140 % de la vitesse d'alimentation dans l'étape b).

**10.** Procédé selon l'une quelconque des revendications 5 à 9, **caractérisé en ce qu'**un séchoir à écoulement, un séchoir à pulvérisation, un séchoir à étages, un séchoir à bande, un séchoir à tube rotatif, un séchoir pneumatique, un séchoir pneumatique rotatif ou une tour à buses est utilisé(e) pour le séchage.

**11.** Procédé selon les revendications 5 à 10, **caractérisé en ce qu'**une granulation avec un compacteur à cylindres est réalisée après le séchage.

**12.** Procédé selon l'une quelconque des revendications 5 à 11, **caractérisé en ce qu'**un ajout d'un sel organique ou inorganique a lieu pendant les étapes b) et/ou d).

**13.** Procédé selon l'une quelconque des revendications 5 à 12, **caractérisé en ce que** les silices précipitées granulées ou non granulées sont modifiées avec des organosilanes en mélanges de 0,5 à 50 parties, par rapport à 100 parties de silice précipitée, notamment 1 à 15 parties, par rapport à 100 parties de silice précipitée, la réaction entre la silice précipitée et l'organosilane étant réalisée pendant la fabrication du mélange (in situ) ou en dehors par pulvérisation, puis recuit du mélange ou par mélange de l'organosilane et de la suspension de silice avec séchage et recuit ultérieurs.

**14.** Mélanges d'élastomères, mélanges de caoutchouc vulcanisables et/ou vulcanisats, qui contiennent la silice précipitée selon l'une quelconque des revendications 1 à 4.

**15.** Pneu, contenant la silice précipitée selon l'une quelconque des revendications 1 à 4.

**16.** Pneu pour véhicule utilitaire, contenant la silice précipitée selon l'une quelconque des revendications 1 à 4.

**17.** Pneu pour moto, contenant la silice précipitée selon l'une quelconque des revendications 1 à 4.

**18.** Pneu pour véhicule à grande vitesse, contenant la silice précipitée selon l'une quelconque des revendications 1 à 4.

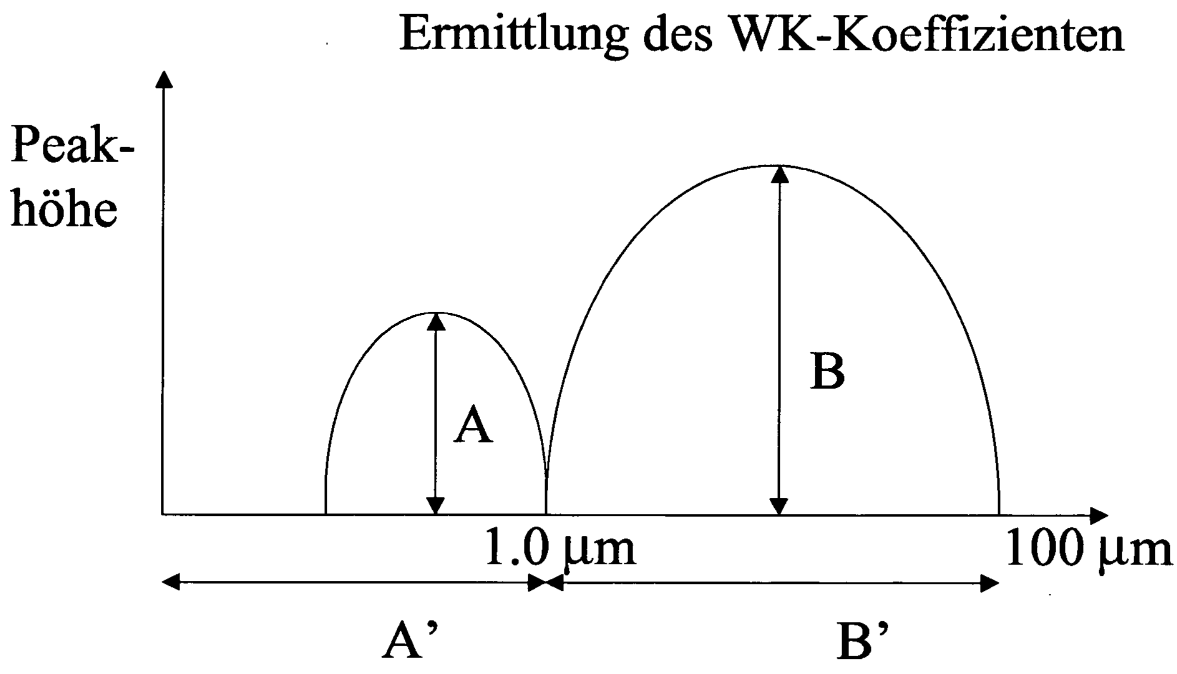


Fig. 1

$$wk = \frac{\text{Peakhöhe der nicht abbaubaren Partikel (B)}}{\text{Peakhöhe der abgebauten Partikel (A)}}$$

A' = Bereich von 0 bis < 1.0 µm

B' = Bereich 1.0 µm – 100 µm

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6013234 A
- EP 0937755 A
- EP 0647591 A
- EP 0643015 A
- US 5705137 A
- EP 0901986 A
- EP 1186629 A
- DE 3437473
- DE 19609619
- DE PS4004781 C
- WO 9909036 A
- EP 1108231 A
- DE 10137809
- DE 10163945
- DE 10223658